# EUROPÄISCHE PATENTANMELDUNG

(11) **EP 2 395 352 A1**
(43) Veröffentlichungstag der Anmeldung: **14.12.2011**
(21) Anmeldenummer: 10165045.5
(22) Anmeldetag: 07.06.2010
(51) Int. Cl.: G01N 33/24, G01N 15/02, E21B 21/06, E21B 49/00, E21C 39/00

(54) **Verfahren und Vorrichtung zur Bestimmung der lokalen räumlichen Ausdehnung der Phase an Wertstoff-Mineral in einem Gestein**

(71) Anmelder: SIEMENS AKTIENGESELLSCHAFT, 80333 München (DE)
(72) Erfinder: Mütze, Thomas, 09599 Freiberg (DE); Röntzsch, Silke, 01900 Großröhrsdorf (DE)

(57) **Zusammenfassung**

Die Erfindung betrifft ein Verfahren und eine Vorrichtung zur Bestimmung einer lokalen Mineralkorngröße eines Wertstoff-Minerals in einem Gestein einer Lagerstätte oder eines Vorkommens, wobei das Gestein mindestens ein weiteres Mineral umfasst, und wobei das Wertstoff-Mineral eine höhere Dichte aufweist als das mindestens eine weitere Mineral. Bei dem Verfahren werden folgende Schritte durchgeführt:
- Durchführen eines Bohrvorgangs mittels eines Bohrgeräts (1) in dem Gestein, wobei Bohrklein (7,8) erzeugt wird,
- Bilden eines Aerosols (4) umfassend das Bohrklein und einen Gasstrom,
- Überführen des Aerosols vom Bohrgerät (1) zu mindestens einem Windsichter (5),
- Durchführen einer Stromklassierung, wobei mindestens zwei Fraktionen (6a,6b,6c) umfassend jeweils gleichfällige Partikel des Bohrkleins gebildet werden, und
- Bestimmen einer Eigenschaft mindestens einer der Fraktionen (6a,6b,6c), welche als Maß für die lokale Mineralkorngröße des Wertstoff-Minerals in dem Gestein (10a) verwendet wird.

## Beschreibung

Verfahren und Vorrichtung zur Bestimmung einer lokalen Mineralkorngröße eines Wertstoff-Minerals in einem Gestein

Die Erfindung betrifft ein Verfahren und eine Vorrichtung zur Bestimmung einer lokalen Mineralkorngröße eines Wertstoff-Minerals in einem Gestein einer Lagerstätte oder eines Vorkommens, wobei das Gestein mindestens ein weiteres Mineral umfasst, und wobei das Wertstoff-Mineral eine höhere Dichte aufweist als das mindestens eine weitere Mineral.

Unter der "Mineralkorngröße" des Wertstoff-Minerals wird dabei nicht die Korngröße der Kristallite dieses Minerals verstanden, sondern die lokale räumliche Ausdehnung der Phase an Wertstoff-Mineral im Gestein.

Die Mineralkorngröße und Verteilung von Mineralien in einem Gestein wird bisher zeitaufwendig dadurch bestimmt, dass in einer Lagerstätte oder einem Vorkommen an verschiedenen Orten Gesteinsproben entnommen und analysiert werden. Dazu werden beispielsweise etwa faustgroße Gesteinsbrocken gesammelt und/oder in einem groben Raster Erkundungsbohrungen durchgeführt, um auswertbare Bohrkerne zu erhalten. Diese Gesteinsproben werden im Labor hinsichtlich ihrer mineralogischen und chemischen Zusammensetzung analysiert. Während die chemische Analyse im wesentlichen Art und Umfang der enthaltenen Elemente bestimmt, wird in der mineralogischen Analyse Art und Umfang der enthaltenen Minerale sowie ihre räumliche Anordnung ermittelt. Zur Bestimmung der räumlichen Anordnung der Minerale werden die Gesteinsproben in Richtung definierter Raumachsen angeschliffen. Durch eine optische Analyse der erhaltenen Dünn- oder Anschliffe, beispielsweise unter einem Mikroskop, lässt sich die räumliche Anordnung und Verteilung der Minerale im Gestein erkennen. Eine räumlich weit verteilte Anordnung der Minerale geht mit einer geringen Mineralkorngröße einher, während Zusammenballungen von Mineralen an bestimmten Stellen mit einer höheren Mineralkorngröße einhergehen.

Hinsichtlich des Aufbaus einer Lagerstätte oder eines Vorkommens bzw. der räumlichen Größenverteilung der Mineralkörner in der Lagerstätte oder dem Vorkommen können auf diese Weise nur wenige Informationen, und diese nur mit beträchtlicher zeitlicher Verzögerung, bereitgestellt werden.

Eine Lagerstättenmodellierung, d.h. die Erstellung eines Modells der Lagerstätte bzw. des Vorkommens umfassend die dreidimensionale Aufzeichnung von Gesteinsschichten oder Gesteinsformationen mit unterschiedlicher Mineralkorngröße des Wertstoff-Minerals, ist aufgrund der geringen Menge an Informationen kaum möglich. Ein auf das lokal vorliegende Gestein, d.h. seinen Gehalt an Wertstoff-Mineralen und deren Mineralkorngröße ausgerichtetes Abbauen und selektives Verwerten ist somit nur begrenzt möglich.

Je nach Mineralkorngröße der Minerale sind unterschiedliche Zerkleinerungsgrade erforderlich, um das Wertstoff-Mineral freizulegen und aus dem gesamten abgebauten Materialstrom effizient abtrennen zu können. So muss ein Gestein mit Wertstoffmineralen einer hohen Mineralkorngröße zur Freilegung des Wertstoff-Minerals weniger intensiv zerkleinert werden als ein Gestein mit Wertstoffmineralen geringerer Mineralkorngröße.

Bisher wurde das abgebaute Gestein auf eine mittlere Mineralkorngröße zerkleinert, wobei ein erster Teil des Gesteins, der ein Wertstoff-Mineral mit einer hohen Mineralkorngröße umfasst, unnötig stark zerkleinert wird, und ein zweiter Teil des Gesteins, der ein Wertstoff-Mineral mit einer geringeren Mineralkorngröße umfasst, ungenügend zerkleinert wird. Die unnötig starke Zerkleinerung des ersten Teils des Gesteins führt zu einem unnötig hohen Energieverbrauch für den Zerkleinerungsvorgang. Dagegen führt die ungenügende Zerkleinerung des zweiten Teils des Gesteins zu einer unzureichenden Freilegung und in Folge zu einer unzureichenden Abtrennbarkeit des Wertstoff-Minerals und einer ineffektiven Ausbeutung der Lagerstätte.

Die WO 2010/000055 A1 offenbart ein Verfahren und eine Vorrichtung zur, insbesondere kontinuierlichen, vor-Ort Analyse von Bohrklein aus Bohrschlamm. Es wird eine Probe des Bohrkleins, welche repräsentativ für die durchbohrte Gesteinsformation ist, entnommen und hinsichtlich der Art des Gesteins und der chemischen Zusammensetzung analysiert. Gegebenenfalls werden auch Bohrparameter, umfassend die Bohrtiefe, Gammastrahlemissionen und/oder weitere Parameter protokolliert und mit den Analyseergebnissen der Probe korreliert.

Es ist Aufgabe der Erfindung, ein Verfahren und eine Vorrichtung anzugeben, welche die Ermittlung einer lokalen Mineralkorngröße eines Wertstoff-Minerals im Gestein einer Lagerstätte oder eines Vorkommen schnell und in hoher Auflösung ermöglichen.

Die Aufgabe wird durch ein Verfahren zur Bestimmung einer lokalen Mineralkorngröße eines Wertstoff-Minerals in einem Gestein einer Lagerstätte oder eines Vorkommens gelöst, wobei das Gestein mindestens ein weiteres Mineral umfasst, und wobei das Wertstoff-Mineral eine höhere Dichte aufweist als das mindestens eine weitere Mineral, umfassend folgende Schritte:
- Durchführen eines Bohrvorgangs mittels eines Bohrgeräts in dem Gestein, wobei Bohrklein erzeugt wird,
- Bilden eines Aerosols umfassend das Bohrklein und einen Gasstrom,
- Überführen des Aerosols vom Bohrgerät zu mindestens einem Windsichter,
- Durchführen einer Stromklassierung, wobei mindestens zwei Fraktionen umfassend jeweils gleichfällige Partikel des Bohrkleins gebildet werden,
- Bestimmen einer Eigenschaft mindestens einer der Fraktionen, welche als Maß für die lokale Mineralkorngröße des Wertstoff-Minerals in dem Gestein verwendet wird.

Die Aufgabe wird durch eine Vorrichtung zur Durchführung des erfindungsgemäßen Verfahrens gelöst, die folgendes umfasst:
- mindestens ein Bohrgerät,
- mindestens eine Einheit zur Bereitstellung des Gasstroms, welche über mindestens eine Gasleitung mit dem mindestens einen Bohrgerät verbunden ist,
- mindestens einen Windsichter pro Bohrgerät, der mit dem jeweiligen Bohrgerät über mindestens eine Aerosolleitung verbunden ist,
- mindestens eine Einrichtung zur Durchführung der Bestimmung einer Eigenschaft mindestens einer der Fraktionen, und
- mindestens eine, mit der mindestens einen Einrichtung datentechnisch verbundene Recheneinheit zur Erfassung der Eigenschaft und zur Korrelation dieser mit der lokalen Mineralkorngröße des Wertstoff-Minerals im Gestein.

Die Erfindung nutzt die Erkenntnis, dass die Eigenschaften von Bohrklein, das von einem Bohrgerät während eines Bohrvorgangs erzeugt wird, in direktem Zusammenhang mit der Mineralkorngröße der Minerale stehen, die in dem durchbohrten Gestein vorhanden sind. Eine gezielte Auswertung der Eigenschaften einer stromklassierten Fraktion des Bohrkleins ermöglicht überraschender Weise hinreichend genaue Rückschlüsse auf die im durchbohrten Gestein vorliegende Mineralkorngröße des Wertstoff-Minerals.

Das Verfahren und die Vorrichtung ermöglichen eine besonders schnelle und hinreichend genaue Bestimmung der Mineralkorngröße eines Wertstoff-Minerals in einem Gestein. Die Bestimmung erfolgt während des Bohrvorgangs, so dass die Daten pro Bohrloch teufenabhängig und zeitnah zur Verfügung stehen. Anstelle der Auswertung der bei Kernbohrungen erhaltenen Bohrkerne zur Ermittlung der jeweiligen Gesteinsstruktur kann bei der Erkundung einer Lagerstätte nun einfach das Bohrklein analysiert werden. Die Anzahl der Bohrlöcher kann deutlich erhöht werden, nachdem keine aufwendigen Laboranalysen an Bohrkernen mehr erforderlich sind. Insbesondere können nun auch Bohrungen zur Anbringung von Sprenglöchern zur Ermittlung der jeweiligen Gesteinsstruktur genutzt werden, die in einem engeren Raster als Erkundungsbohrungen gesetzt werden. Sprenglöcher werden typischerweise in einem horizontalen Abstand von 2 bis 5 m abgeteuft, wobei Daten mit einer vertikalen Auflösung im dm-Bereich bereitgestellt werden können. Auf diese Weise ist eine besonders schnelle und genaue Lagerstättenmodellierung und in Folge ein besonders effizienter Abbau der Lagerstätte möglich.

In einer bevorzugten Ausgestaltung des Verfahrens erfolgt das Bestimmen der Eigenschaft, indem eine Partikelgrößenanalyse an den gleichfälligen Partikeln der Fraktionen durchgeführt wird, wobei mindestens in einer der Fraktionen zwei Partikelfraktionen mit unterschiedlichen mittleren Partikelgrößen erhalten werden, die durch eine Ausfallkörnung voneinander getrennt sind, und wobei die Partikelgrößen d einer ersten Partikelfraktion als Maß für die lokale Mineralkorngröße des Wertstoff-Minerals in dem Gestein verwendet werden. Unter Ausfallkörnung wird hier ein Bereich verstanden, in dem für bestimmte Partikelgrößen keine Partikel in der Partikelgrößenanalyse vorhanden sind.

Im Fall, dass Partikelgrößenanalysen von mindestens zwei Fraktionen jeweils eine Ausfallkörnung zeigen, wird diejenige erste Partikelfraktion als Maß für die lokale Mineralkorngröße des Wertstoff-Minerals in dem Gestein verwendet, die aus der Fraktion stammt, bei der die Ausfallkörnung am größten ist, d.h. der Abstand zwischen der ersten und der zweiten Partikelfraktion am breitesten ist.

Eine Partikelgrößenverteilung in Bohrklein, das von einem Bohrgerät während eines Bohrvorgangs erzeugt wird, steht in direktem Zusammenhang mit der Mineralkorngröße der Minerale, die in dem durchbohrten Gestein vorhanden sind. Eine gezielte Auswertung der Partikelgrößenverteilung einer stromklassierten Fraktion des Bohrkleins ermöglicht überraschender Weise hinreichend genaue Rückschlüsse auf die im durchbohrten Gestein vorliegenden Mineralkorngrößen des Wertstoff-Minerals. Die Einrichtung zur Durchführung der Bestimmung einer Eigenschaft der Fraktionen ist demnach bevorzugt zur Durchführung einer Partikelgrößenanalyse eingerichtet, wobei die Einrichtung und/oder die mindestens eine Recheneinheit zur Erfassung der Partikelgrößen der ersten Partikelfraktion und zur Korrelation dieser mit der lokalen Mineralkorngröße des Wertstoff-Minerals im Gestein eingerichtet ist.

Generell wird es derzeit für das Verfahren als erforderlich angesehen, dass das Wertstoff-Mineral im Gestein mindestens die 1,5-fache Dichte des mindestens einen weiteren Minerals aufweist. Bei geringeren Dichteunterschieden ergeben sich bei der Partikelgrößenanalyse einer der nach der Stromklassierung erhaltenen Fraktionen des Bohrkleins keine eindeutig voneinander zu unterscheidenden bzw. auswertbaren Partikelfraktionen, die durch eine Ausfallkörnung getrennt sind.

Nachdem zwischen der Entstehung des Bohrkleins und der Auswertung der Partikelgrößenverteilung einer stromklassierten Fraktion des Bohrkleins eine gewisse zeitliche Differenz besteht, muss diese bei der Modellbildung natürlich berücksichtigt werden, um dem Gestein lokal die richtige Wertstoff-Mineralkorngröße zuordnen zu können.

Vorzugsweise wird die lokale Mineralkorngröße eines Wertstoff-Minerals in Form eines Erzminerals bestimmt. Als "Erze" werden natürlich vorkommende Mineralaggregate von wirtschaftlichem Interesse bezeichnet, aus denen durch Bearbeitung ein oder mehrere Wertstoffe extrahiert werden können. Meistens sind dies Minerale, die mehr oder weniger metallische Bestandteile, wie zum Beispiel Eisen, Kupfer, Nickel, Zinn, Zink, Silber, Gold usw. enthalten.

In einer besonders bevorzugten Ausgestaltung des Verfahrens erfolgt die Partikelgrößenanalyse der stromklassierten Fraktionen automatisch, insbesondere mittels einer optischen Analyse bevorzugt mittels Laserbeugung. Dabei werden die Partikel der Fraktionen optisch erfasst und vermessen. Insbesondere erfolgt die Partikelgrößenanalyse der gleichfälligen Partikel der Fraktionen kontinuierlich während ihres Falls, beispielsweise direkt am entsprechenden Ableitkanal oder Abwurfschacht für die Fraktion am Windsichter. So liegt das Ergebnis der Analyse in einem besonders engen zeitlichen Zusammenhang mit der Bohrung an einer bestimmten Position im Gestein vor und kann in Kenntnis der Fördergeschwindigkeit des Bohrkleins im Aerosol in einfacher Weise rechnerisch berücksichtigt werden.

Während des Bohrvorgangs wird insbesondere eine Teufe eines Bohrmeißels des Bohrgeräts und/oder Positionsdaten zur Position des Bohrmeißels in der Lagerstätte oder dem Vorkommen erfasst und logisch mit dem dieser Stelle zugehörigen Maß für die lokale Mineralkorngröße verknüpft, um daraus eine dreidimensionale Mineralkorngrößenverteilung des Wertstoff-Minerals in der Lagerstätte oder dem Vorkommen zu ermitteln. Dieser Vorgang wird auch als Lagerstättenmodellierung bezeichnet, der bereits eingangs erläutert wurde. Um die aktuelle Position des Bohrgmeißels während einer Bohrung in der Lagerstätte oder einem Vorkommen möglichst genau zu ermitteln, werden insbesondere die Bohrteufe und die Bohrlochneigung gemessen und die Position des Bohransatzpunktes, bevorzugt mittels einer GPS-Einheit, erfasst.

Bevorzugt werden am Bohrgerät mindestens ein vorgegebener Bohrparameter und mindestens ein, ein aktuelles Bohrverhalten des Bohrgeräts charakterisierender Messwert erfasst. Daraufhin wird vorzugsweise eine Abhängigkeit des mindestens einen Messwerts von dem mindestens einen Bohrparameter rechnerisch eliminiert und mindestens ein sich ergebender Gesteinstextur-abhängiger Kennwert als ein weiteres Maß zur Ermittlung der lokalen Mineralkorngröße des Wertstoff-Minerals verwendet. Dies verbessert die Genauigkeit der Bestimmung der Mineralkorngrößen des Wertstoff-Minerals.

Der mindestens eine Bohrparameter wird beispielsweise aus einem Andruck des Bohrmeißels des Bohrgeräts, einer Drehzahl des Bohrmeißels, einem Bohrmeißelmaterial, einer Bohrmeißelgeometrie, einem Gasvolumenstrom des Gasstroms, einer Einsatzdauer bzw. einen Verschleißzustand des Bohrmeißels einer Schlagfrequenz des Bohrmeißels, und dergleichen gebildet. Die Schlagfrequenz ergibt sich dabei unter anderem aus Andruck-und Gasstromdaten.

Der mindestens eine, das aktuelle Bohrverhalten charakterisierende Messwert wird insbesondere aus der Gruppe an Messwerten umfassend eine Bohrgeschwindigkeit, ein resultierendes Drehmoment am Kraftdrehkopf des Bohrmeißels, einen Gasdruck des Gasstroms, einen Energieeintrag in das Bohrgerät, ein Schwingverhalten eines Bohrgestänges des Bohrgeräts und dergleichen ausgewählt.

So ist beispielsweise die Bohrgeschwindigkeit unter anderem von der Festigkeit und Zusammensetzung des durchbohrten Gesteins abhängig, wobei eine hohe Festigkeit und/oder eine Anhäufung harter Minerale eine Verringerung der Bohrgeschwindigkeit zur Folge haben. Weiterhin ist die Bohrgeschwindigkeit aber davon abhängig, welches Bohrgerät und Bohrwerkzeug eingesetzt wird. Insbesondere sind hier der Typ, die Geometrie und der Verschleißzustand des Bohrmeißels von Bedeutung. Diese Bohrparameter sind natürlich bei der Bewertung der Bohrgeschwindigkeit zu berücksichtigen.

Die mindestens eine Recheneinheit der Vorrichtung ist datentechnisch mit der mindestens einen Einrichtung verbunden. Darunter wird entweder eine Verbindung mittels einer Verkabelung, insbesondere aber eine drahtlose Funkverbindung verstanden. Eine drahtlose Datenübermittlung zur mindestens einen Recheneinheit ermöglicht eine vor Staub und Erschütterungen geschützte Anordnung der Recheneinheit in räumlicher Trennung vom Bohrgeschehen.

Die mindestens eine Recheneinheit der Vorrichtung ist bevorzugt weiterhin zur Erfassung des mindestens einen Bohrparameters oder des mindestens einen, das aktuelle Bohrverhalten des Bohrgeräts charakterisierenden Messwerts am Bohrgerät eingerichtet. Dazu können am Bohrgerät vorhandene Sensoren verwendet oder an das Bohrgerät zusätzliche Sensoren angebaut werden.

Die mindestens eine Recheneinheit ist weiterhin mit Vorteil dazu eingerichtet, eine Abhängigkeit des mindestens einen, ein aktuelles Bohrverhalten des Bohrgeräts charakterisierenden Messwerts von dem mindestens einen Bohrparameter rechnerisch zu eliminieren und den mindestens einen Gesteinstexturabhängigen Kennwert zu errechnen, welcher ein weiteres Maß für die lokale Mineralkorngröße des Wertstoff-Minerals und/oder eine Festigkeit des Gesteins bildet. Die rechnerische Eliminierung der Abhängigkeit von den Bohrparametern erfordert eine überschaubare Anzahl von Vorversuchen, in welchen die einzelnen Einflussgrößen ermittelt und miteinander korreliert werden. Die auf diese Weise erstellte Datenbasis wird auf der mindestens einen Recheneinheit hinterlegt und dient zur Ermittlung des lediglich von der Gesteinstextur abhängigen Kennwerts.

Schließlich ist es von Vorteil, wenn die mindestens eine Recheneinheit weiterhin eingerichtet ist, die lokale Mineralkorngröße des Wertstoff-Minerals anhand des Maßes und des weiteren Maßes zu ermitteln. Dadurch wird die Genauigkeit des ermittelten lokalen Wertes der Mineralkorngröße für das Wertstoff-Minerals noch einmal verbessert.

Der mindestens eine Windsichter und die mindestens eine Einrichtung zur Bestimmung einer Eigenschaft der ausgewählten Fraktion, insbesondere zur Durchführung der Partikelgrößenanalyse, sind vorzugsweise in unmittelbarer Nähe zum Bohrgerät, insbesondere am Bohrgerät, angeordnet. Dadurch werden die Zeit zum Transport des Bohrkleins vom Entstehungsort zum Windsichter und die benötigte Analysezeit minimiert. Als Windsichter wird bevorzugt ein Querstromsichter eingesetzt. In einer bevorzugten Ausgestaltung der Vorrichtung ist am mindestens einen Bohrgerät mindestens ein Körperschallsensor zur Erfassung mindestens eines, das aktuelle Bohrverhalten charakterisierenden Messwerts in Form eines Schwingverhaltens des Bohrgestänges des Bohrgeräts vorhanden. So lässt sich von der Vibration des Bohrgestänges auf die Eigenschaften des Gesteins, wie beispielsweise der Festigkeit des Gesteins, das momentan durchbohrt wird, schließen.

Auf Basis des in der mindestens einen Recheneinheit ermittelten Modells und der weiterhin an diese übermittelten Werte, kann unter Einsatz der mindestens einen Recheneinheit bevorzugt eine Steuerung des Abbaubetriebs im Bereich der Lagerstätte oder des Vorkommens erfolgen, vor allem hinsichtlich einer Sprengung, eines Transports und einer Lagerung des abgebauten Gesteins sowie einer Gesteinszerkleinerung. So kann in Kenntnis des Modells und damit der lokalen Mineralkorngröße des Wertstoff-Minerals und ggf. der lokalen Festigkeit des Gesteins die lokal eingesetzte Menge an Sprengstoff angepasst werden, das abgebaute Gestein je nach Eigenschaft an unterschiedlichen Orten gelagert werden oder weiterhin unterschiedlich stark zerkleinert werden, um das Wertstoff-Mineral freizulegen.

Die Figuren 1 bis 3 sollen ein mögliches Verfahren und eine mögliche Vorrichtung gemäß der Erfindung beispielhaft erläutern. So zeigt
FIG 1 schematisch einen Verfahrensablauf,
FIG 2 schematisch eine Vorrichtung zur Durchführung des Verfahrens, und
FIG 3 schematisch die hauptsächlichen Daten- und Stoffströme für ein Verfahren.

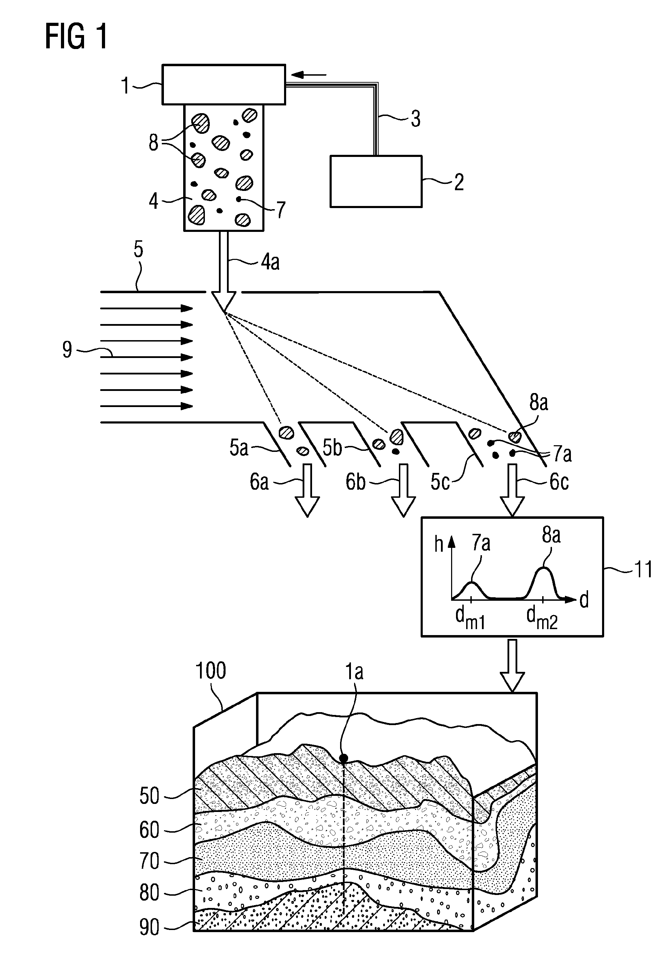

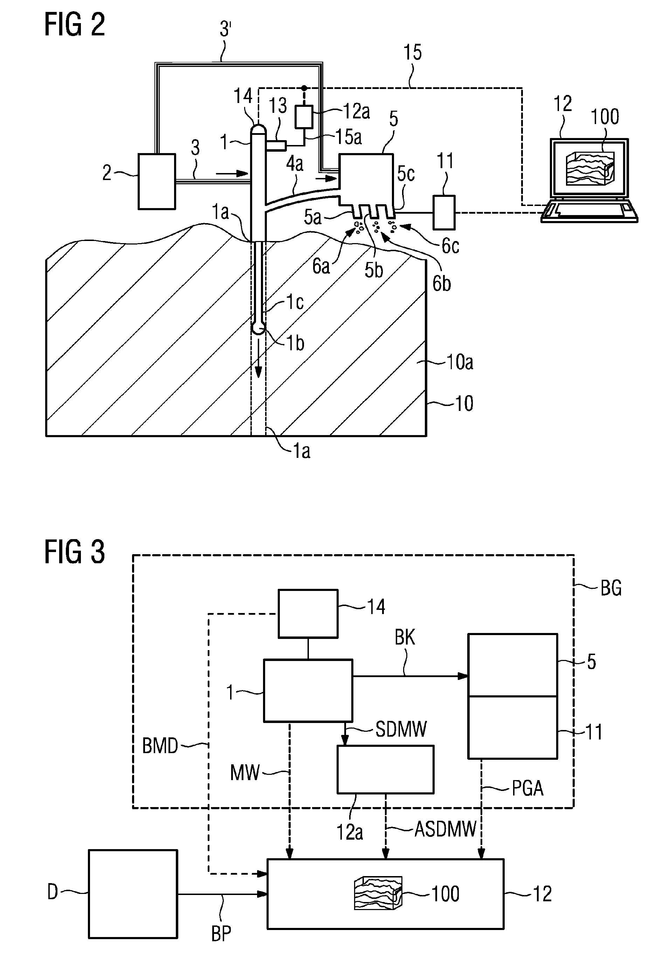

FIG 1 zeigt schematisch einen Verfahrensablauf zur Bestimmung einer lokalen Mineralkorngröße eines Wertstoff-Minerals in einem Gestein 10a einer Lagerstätte oder eines Vorkommens 10 (vergleiche auch FIG 2). Das Gestein 10a umfasst ein Wertstoff-Mineral in Form von Chalkopyrit und ein weiteres Mineral in Form von Quarz, wobei das Wertstoff-Mineral eine um das mindestens 1,5-fache höhere Dichte aufweist als das weitere Mineral.

In dem Gestein 10a wird mittels eines Bohrgeräts 1 ausgehend von einem Bohransatzpunkt 1a ein Bohrvorgang durchgeführt, wobei Bohrklein 7, 8 umfassend Partikel 7 aus Wertstoff-Mineral und Partikel 8 aus dem weiteren Mineral gebildet wird. Durch Einleiten eines Gasstroms in das Bohrgerät 1 in Richtung des Bohrmeißels 1b wird das Bohrklein 7, 8 vom Bohrmeißel 1b abtransportiert. Es bildet sich aus dem Bohrklein 7, 8 und dem Gasstrom ein fließfähiges Aerosol 4, das entgegen der Bohrrichtung an die Erdoberfläche befördert wird. Das Aerosol 4 wird nun über eine Aerosolleitung 4a vom Bohrgerät 1 zu einem Windsichter 5, hier in Form eines Querstromsichters, geleitet und eine Stromklassierung in einer Gasströmung 9 durchgeführt, wobei das Bohrklein 7, 8 in mindestens zwei, in diesem Beispiel in drei Fraktionen 6a, 6b, 6c zerlegt wird. Das Bohrklein kann aber auch in mehr Fraktion zerlegt werden. Jede Fraktion 6a, 6b, 6c umfasst jeweils gleichfällige Partikel des Bohrkleins 7, 8, d.h. es befinden sich beispielsweise in der Fraktion 6c sowohl kleine Partikel 7' aus Wertstoff-Mineral als auch deutlich größere Partikel 8' des weiteren Minerals mit geringerer Dichte, die aufgrund der gleichen Sinkgeschwindigkeit gleich weit mit der Gasströmung 9 fortgetragen werden.

Es wird nun an allen drei Fraktionen 6a, 6b, 6c eine Partikelgrößenanalyse durchgeführt. Diese kann sequentiell erfolgen, wird bevorzugt aber gleichzeitig für alle Fraktionen 6a, 6b, 6c durchgeführt, die aus den Auswurfschächten 5a, 5b, 5c des Windsichters 5 rieseln. Der genaue Ablauf wird beispielhaft für die Fraktion 6c gezeigt, die aus dem Auswurfschacht 5c des Windsichters 5 rieselt. Dabei wird eine Häufigkeit h von Partikeln pro Partikelgröße d bzw. Partikeldurchmesser bestimmt. Es ergeben sich zwei Partikelfraktionen 7a, 8a mit unterschiedlichen mittleren Partikelgrößen dₘ₁, dₘ₂, die hier durch eine Ausfallkörnung voneinander getrennt vorliegen. Unter einer Ausfallkörnung wird hier ein Bereich verstanden, in dem für bestimmte Partikelgrößen keine Partikel vorhanden sind.

Nun wird die Partikelgrößenanalyse derjenigen Fraktion weiter ausgewertet, bei welcher der Abstand zwischen den zwei Partikelfraktionen maximal ist. Der Bereich der Ausfallkörnung ist hier demnach besonders groß. Hier wird nun angenommen, dass die Fraktion 6c dies erfüllt.

Die Partikelgröße d der ersten Partikelfraktion 7a der Fraktion 6c dient nun als ein Maß für die lokale Mineralkorngröße des Wertstoff-Minerals in dem Gestein 10a. Die Partikelgrößen d der ersten Partikelfraktionen 7a sind dabei proportional der Mineralkorngröße des Wertstoff-Minerals im Gestein 10a.

Anhand der ermittelten lokalen Mineralkorngröße pro Bohrstelle und Teufe des Bohrmeißels im Gestein wird nun ein Lagerstättenmodell 100 erstellt. Sofern an einer ausreichenden Anzahl von Bohrstellen die Mineralkorngrößen des Wertstoff-Minerals in unterschiedlicher Teufe ermittelt wurden, zeigt das Lagerstättenmodell 100 ein hinreichend gutes dreidimensionales Abbild der Lagerstätte, wobei die räumlichen Lagen 50, 60, 70, 80, 90 von Gestein mit unterschiedlicher lokaler Mineralkorngröße des Wertstoff-Minerals daraus ersichtlich sind. Ausgehend vom Bohransatzpunkt 1a wurden hier senkrecht in der Teufe somit fünf unterschiedliche Mineralkorngrößen für das Wertstoff-Mineral ermittelt.

FIG 2 zeigt schematisch eine Vorrichtung zur Durchführung des Verfahrens im Bereich einer Lagerstätte 10 mit im Schnitt dargestelltem Gestein 10a. Die Vorrichtung umfasst ein Bohrgerät 1 mit einem Bohrmeißel 1b und eine Einheit 2 zur Bereitstellung des Gasstroms zur Bildung des Aerosols 4, welche über mindestens eine Gasleitung 3 mit dem Bohrgerät 1 verbunden ist. Weiterhin umfasst die Vorrichtung einen Windsichter 5, der mit dem Bohrgerät 1 über eine Aerosolleitung 4a verbunden ist.

Um eine Stromklassierung des Bohrkleins 7, 8 durchzuführen, wird der Windsichter 5 in diesem Beispiel von der Einheit 2 über eine weitere Gasleitung 3' mit der Gasströmung 9 (siehe FIG 1) versorgt. Zudem umfasst die Vorrichtung eine Einrichtung 11 zur Durchführung von Partikelgrößenanalysen an den gleichfälligen Partikeln der Fraktionen 6a, 6b, 6c sowie eine damit datentechnisch verbundene, jedoch räumlich vom Bohrgeschehen getrennt aufgestellte Recheneinheit 12. Die Einrichtung 11 führt hier eine optische Analyse, insbesondere mittels Laserbeugung, durch und wird nacheinander am jeweiligen Auswurfschacht 5a, 5b, 5c des Windsichters 5 für die Fraktionen 6a, 6b, 6c installiert, wo sich die Fraktionen 6a, 6b, 6c gerade im freien Fall befinden. Alternativ und bevorzugt sind so viele Einrichtungen 11 wie Abwurfschächte 5a, 5b, 5c vorhanden, wobei jeweils eine an einem Abwurfschacht 5a, 5b, 5d des Windsichters 5 installiert ist, um gleichzeitig eine Partikelgrößenanalyse für eine jede der Fraktionen 6a, 6b, 6c durchzuführen.

Die von der mindestens einen Einrichtung 11 ermittelten Partikelgrößenanalysen können entweder in der Einrichtung 11 ausgewertet werden und die Auswertung an die Recheneinheit 12 übermittelt werden, oder die Recheneinheit 12 übernimmt die Auswertung. Bei der Auswertung werden die Partikelfraktionen jeder Fraktion 6a, 6b, 6c analysiert und diejenige Fraktion ausgewählt, bei der der Abstand zwischen der ersten Partikelfraktion 7a und der zweiten Partikelfraktion 7b maximal ist. Die erste Partikelfraktion 7a dieser ausgewählten Fraktion 6a, 6b, 6c wird für die Bestimmung der lokalen Mineralkorngröße des Wertstoff-Minerals im Gestein 10a verwendet, da zwischen diesen eine Korrelation besteht.

Um eine Bohrposition des Bohrgeräts 1 in der Lagerstätte oder dem Vorkommen 10 erfassen zu können, weist das Bohrgerät 1 mindestens eine GPS-Einheit 14 auf. Die Positionsdaten, insbesondere die aktuelle Teufe des Bohrmeißels 1b und mindestens ein das Bohrverhalten charakterisierender Messwert, wie beispielsweise die Bohrgeschwindigkeit, werden insbesondere per Funk 15 an die räumlich vom Bohrgeschehen getrennt aufgestellte Recheneinheit 12 übermittelt.

Auf Basis der nun vorhandenen Daten wird mittels der Recheneinheit 12 ein Lagerstättenmodell 100 bzw. Modell eines Vorkommens erstellt.

Am Bohrgerät 1 ist bevorzugt weiterhin ein Körperschallsensor 13 installiert, welcher zur Erfassung eines weiteren, das aktuelle Bohrverhalten charakterisierenden Messwerts, hier des Schwingverhaltens des Bohrgestänges 1c des Bohrgeräts 1, dient. In Kenntnis der am Bohrgerät 1 vorgegebenen Bohrparameter und des Schwingverhaltens des Bohrgestänges 1c kann eine Abhängigkeit des Schwingverhaltens von den Bohrparametern rechnerisch mittels einer weiteren Recheneinheit 12a, welche in räumlicher Nähe zum Bohrgerät 1 angeordnet ist, eliminiert werden. Es ergibt sich ein Gesteinstextur-abhängiger Kennwert, der als ein weiteres Maß zur Ermittlung der lokalen Mineralkorngröße des Wertstoff-Minerals und weiterhin insbesondere der Festigkeit des Gesteins zusätzlich herangezogen werden kann. Die Daten zum Schwingungsverhalten sind in der Regel so umfangreich, dass eine Datenübertragung dieser per Funk an die Recheneinheit 12 nur schwer realisierbar ist. Allerdings kann eine in der vor Ort installierten weiteren Recheneinheit 12a vorgenommener Auswertung der Schwingungsdaten per Funk von der weiteren Recheneinheit 12a an die entfernt angeordnete Recheneinheit 12 übermittelt werden.

FIG 3 zeigt schematisch die hauptsächlichen Daten- und Stoffströme für ein mögliches Verfahren. Die Recheneinheit 12 wird über eine Datenquelle D mit den in der Regel bekannten Bohrparametern BP versorgt, wobei als Datenquelle das Bedienpersonal und/oder sonstige elektronische Geräte dienen kann/ können. Es werden Bohrparameter BP in Form von Daten zur Art des Bohrgeräts 1, des Typs und der Geometrie des Bohrmeißels des Bohrgeräts 1, der Einsatzdauer, während der der Bohrmeißel bereits betrieben wurde, des Andrucks und/oder der Drehzahl des Bohrmeißels usw. übertragen. Dabei kommt in der Regel eine drahtbehaftete Datenleitung zum Einsatz. Im Bohrbetrieb werden vom Bohrgerät 1 bzw. daran vorhandenen Messwertaufnehmern aktuelle, das Bohrverhalten charakterisierenden Messwerte MW an die Recheneinheit 12 übermittelt. Bei den Messwerten MW handelt es sich beispielsweise um eine Bohrgeschwindigkeit, einen Energieeintrag in das Bohrgerät 1 usw. Weiterhin werden von der mindestens einen GPS-Einheit 14 die aktuellen Positionsdaten BMD des Bohrgeräts 1, insbesondere des Bohrmeißels, an die Recheneinheit 12 übermittelt.

Das vom Bohrgerät erzeugte Bohrklein BK wird nach Bildung des Aerosols an den Windsichter 5 übermittelt und stromklassiert. Die aus den Auswurfschächten des Windsichters 5 austretenden Fraktionen werden von der mindestens einen Einrichtung 11 jeweils hinsichtlich der darin vorhandenen Partikelgrößenverteilung analysiert. Die ermittelten Analysedaten PGA werden, ggf. nach einer weiteren Auswertung in der Einrichtung 11 hinsichtlich der Fraktion mit größter Ausfallkörnung, an die Recheneinheit 12 übermittelt.

Nachdem die Messwerte MW, die Positionsdaten BMD und die Partikelgrößenanalyse PGA im Bereich des Bohrgeschehens BG aufgenommen werden, werden diese bevorzugt drahtlos 15 (siehe gestrichelte Linien) an die räumlich getrennt davon angeordnete Recheneinheit 12 übermittelt.

Messwerte MW zum Bohrverhalten, die in Form von Schwingungsdaten SDMW vorliegen, werden per Drahtverbindung 15a an die weitere Recheneinheit 12a übermittelt und hier direkt im Bereich des Bohrgeschehenes BG ausgewertet und anschließend drahtlos 15 an die Recheneinheit 12 übermittelt.

Auf Basis des in der Recheneinheit ermittelten Modells 100 erfolgt insbesondere eine Steuerung des Abbaubetriebs im Bereich der Lagerstätte oder des Vorkommens, vor allem hinsichtlich einer Sprengung, eines Transport und einer Lagerung des abgebauten Gesteins sowie einer Gesteinszerkleinerung. So kann in Kenntnis des Modells 100 und ggf. der lokalen Festigkeit des Gesteins die lokal eingesetzte Menge an Sprengstoff angepasst werden, das abgebaute Gestein je nach Eigenschaft an unterschiedlichen Orten gelagert werden oder unterschiedlich stark zerkleinert werden.

Die Figuren 1 bis 3 zeigen dabei lediglich Beispiele für das Verfahren und die Vorrichtung auf. Ein Fachmann ist ohne weiteres in der Lage, die erfindungsgemäße Vorrichtung und das erfindungsgemäße Verfahren an die jeweilige Lagerstätte oder das jeweilig Vorkommen anzupassen, um die lokalen Mineralkorngrößen der vorhandenen Wertstoff-Minerale zu ermitteln.

So kann natürlich, je nach Lagerstätte oder Vorkommen, auch vertikal und/oder horizontal und/oder schräg ins Erdreich gebohrt werden. Weiterhin kann eine andere Art von Windsichter und/oder Einrichtung zur Durchführung der Bestimmung einer Eigenschaft der ausgewählten Fraktion eingesetzt werden. So kann beispielsweise alternativ eine Siebklassierung der stromklassierten Fraktionen in die Partikelfraktionen erfolgen, wobei dies allerdings zeitaufwendiger als eine optische Analyse der Partikelgrößen ist.

## Patentansprüche

1. Verfahren zur Bestimmung einer lokalen Mineralkorngröße eines Wertstoff-Minerals in einem Gestein (10a) einer Lagerstätte oder eines Vorkommens (100), wobei das Gestein (10a) mindestens ein weiteres Mineral umfasst, und wobei das Wertstoff-Mineral eine höhere Dichte aufweist als das mindestens eine weitere Mineral, **gekennzeichnet durch** folgende Schritte:
- Durchführen eines Bohrvorgangs mittels eines Bohrgeräts (1) in dem Gestein (10a), wobei Bohrklein (7, 8) erzeugt wird,
- Bilden eines Aerosols (4) umfassend das Bohrklein (7, 8) und einen Gasstrom,
- Überführen des Aerosols (4) vom Bohrgerät (1) zu mindestens einem Windsichter (5),
- Durchführen einer Stromklassierung, wobei mindestens zwei Fraktionen (6a, 6b, 6c) umfassend jeweils gleichfällige Partikel des Bohrkleins (7, 8) gebildet werden,
- Bestimmen einer Eigenschaft mindestens einer der Fraktionen (6a, 6b, 6c), welche als Maß für die lokale Mineralkorngröße des Wertstoff-Minerals in dem Gestein (10a) verwendet wird.

2. Verfahren nach Anspruch 1,
**dadurch gekennzeichnet, dass** das Bestimmen der Eigenschaft erfolgt, indem eine Partikelgrößenanalyse an den gleichfälligen Partikeln der Fraktionen (6a, 6b, 6c) durchgeführt wird, wobei mindestens in einer der Fraktionen (6a, 6b, 6c) zwei Partikelfraktionen (7a, 8a) mit unterschiedlichen mittleren Partikelgrößen (dₘ₁, dₘ₂) erhalten werden, die durch eine Ausfallkörnung voneinander getrennt sind, und wobei die Partikelgrößen d einer ersten Partikelfraktion (7a) als Maß für die lokale Mineralkorngröße des Wertstoff-Minerals in dem Gestein (10a) verwendet werden.

3. Verfahren nach Anspruch 2,
**dadurch gekennzeichnet, dass** im Fall, dass Partikelgrößenanalysen von mindestens zwei Fraktionen (6a, 6b, 6c) jeweils eine Ausfallkörnung zeigen, die erste Partikelfraktion als Maß für die lokale Mineralkorngröße des Wertstoff-Minerals in dem Gestein (10a) verwendet wird, die aus derjenigen Fraktion (6a, 6b, 6c) stammt, bei der die Ausfallkörnung am größten ist.

4. Verfahren nach einem der Anspruch 1 bis 3,
**dadurch gekennzeichnet, dass** die lokale Mineralkorngröße eines Erzminerals bestimmt wird.

5. Verfahren nach einem der Ansprüche 2 bis 4,
**dadurch gekennzeichnet, dass** die Partikelgrößenanalyse automatisch mittels einer optischen Analyse erfolgt.

6. Verfahren nach einem der Ansprüche 2 bis 5,
**dadurch gekennzeichnet, dass** die Partikelgrößenanalyse der gleichfälligen Partikel der Fraktionen (6a, 6b, 6c) kontinuierlich während ihres Falls erfolgt.

7. Verfahren nach einem der Ansprüche 1 bis 6,
**dadurch gekennzeichnet, dass** während des Bohrvorgangs eine Teufe eines Bohrmeißels (1b) des Bohrgeräts (1) und/oder Positionsdaten zur Position des Bohrmeißels (1b) in der Lagerstätte oder dem Vorkommen (10) erfasst und logisch mit dem dieser Stelle zugehörigen Maß verknüpft werden, und dass daraus eine dreidimensionale Mineralkorngrößenverteilung des Wertstoff-Minerals in der Lagerstätte oder dem Vorkommen (10) ermittelt wird.

8. Verfahren nach einem der Ansprüche 1 bis 7,
**dadurch gekennzeichnet, dass** am Bohrgerät (1) mindestens ein vorgegebener Bohrparameter und mindestens ein, ein aktuelles Bohrverhalten des Bohrgeräts (1) charakterisierender Messwert erfasst werden, eine Abhängigkeit des mindestens einen Messwerts von dem mindestens einen Bohrparameter rechnerisch eliminiert wird, und dass mindestens ein sich ergebender Gesteinstextur-abhängiger Kennwert als ein weiteres Maß zur Ermittlung der lokalen Mineralkorngröße des Wertstoff-Minerals verwendet wird.

9. Verfahren nach Anspruch 8,
**dadurch gekennzeichnet, dass** der mindestens eine Bohrparameter aus einem Andruck des Bohrmeißels (1b) des Bohrgeräts (1) und/oder einer Drehzahl des Bohrmeißels (1b) und/oder einem Gasvolumenstrom des Gasstroms zur Bildung des Aerosols (4) und/oder einer Schlagfrequenz des Bohrmeißels (1b) und/oder einer bisherigen Einsatzdauer des Bohrmeißels (1b) und/oder Material- oder Geometriedaten des Bohrmeißels (1b) gebildet wird.

10. Verfahren nach einem der Ansprüche 8 oder 9,
**dadurch gekennzeichnet, dass** der mindestens eine, das aktuelle Bohrverhalten charakterisierende Messwert aus der Gruppe an Messwerten umfassend eine Bohrgeschwindigkeit, ein resultierendes Drehmoment am Kraftdrehkopf des Bohrmeißels (1b), einen Gasdruck des Gasstroms zur Bildung des Aerosols (4), einen Energieeintrag in das Bohrgerät (1) und ein Schwingverhalten eines Bohrgestänges des Bohrgeräts (1) ausgewählt wird.

11. Vorrichtung zur Durchführung eines Verfahren nach einem der Ansprüche 1 bis 10, umfassend
- mindestens ein Bohrgerät (1),
- mindestens eine Einheit (2) zur Bereitstellung des Gasstroms zur Bildung des Aerosols(4), welche über mindestens eine Gasleitung (3) mit dem mindestens einen Bohrgerät (1) verbunden ist,
- mindestens einen Windsichter (5) pro Bohrgerät (1), der mit dem mindestens einen Bohrgerät (1) über mindestens eine Aerosolleitung (4a) verbunden ist,
- mindestens eine Einrichtung (11) zur Durchführung der Bestimmung der Eigenschaft der Fraktionen (6a, 6b, 6c), und
- mindestens eine, mit der mindestens einen Einrichtung (11) datentechnisch verbundene Recheneinheit (12) zur Erfassung der Eigenschaft und zur Korrelation dieser mit der lokalen Mineralkorngröße des Wertstoff-Minerals im Gestein (10a).

12. Vorrichtung nach Anspruch 11,
wobei die mindestens eine Einrichtung (11) zur Durchführung einer Partikelgrößenanalyse eingerichtet ist, und wobei die mindestens eine Einrichtung (11) oder die mindestens eine Recheneinheit (12) zur Korrelation der ersten Partikelfraktion (7a) mit der lokalen Mineralkorngröße des Wertstoff-Minerals im Gestein (10a) eingerichtet ist.

13. Vorrichtung nach Anspruch 11 oder Anspruch 12,
wobei die mindestens eine Recheneinheit (12) weiterhin zur Erfassung des mindestens einen Bohrparameters oder des mindestens einen, das aktuelle Bohrverhalten des Bohrgeräts (1) charakterisierenden Messwerts am Bohrgerät (1) eingerichtet ist.

14. Vorrichtung nach einem der Ansprüche 11 bis 13,
wobei die mindestens eine Recheneinheit (12) weiterhin eingerichtet ist, eine Abhängigkeit des mindestens einen, ein aktuelles Bohrverhalten des Bohrgeräts (1) charakterisierenden Messwerts von dem mindestens einen Bohrparameter rechnerisch zu eliminieren und den mindestens einen Gesteinstexturabhängigen Kennwert zu errechnen, welcher ein weiteres Maß für die lokale Mineralkorngröße des Wertstoff-Minerals und/oder eine Festigkeit des Gesteins bildet.

15. Vorrichtung nach Anspruch 14,
wobei die mindestens eine Recheneinheit (12) weiterhin eingerichtet ist, die lokale Mineralkorngröße des Wertstoff-Minerals anhand des Maßes und des weiteren Maßes zu ermitteln.

16. Vorrichtung nach einem der Ansprüche 11 bis 15,
wobei der mindestens eine Windsichter (5) und die mindestens eine Einrichtung (11), insbesondere zur Durchführung der Partikelgrößenanalyse, in unmittelbarer Nähe zum Bohrgerät (1), insbesondere am Bohrgerät (1), angeordnet sind.

17. Vorrichtung nach einem der Ansprüche 11 bis 16,
wobei am mindestens einen Bohrgerät (1) mindestens ein Körperschallsensor (13) zur Erfassung eines Schwingverhaltens des Bohrgestänges des Bohrgeräts (1) vorhanden ist.
